Europäisches Patentamt

European Patent Office

Office européen des brevets

(11) Numéro de publication : **0 443 887 A1**

# (12) DEMANDE DE BREVET EUROPEEN

(21) Numéro de dépôt : **91400113.6**

(22) Date de dépôt : **18.01.91**

(51) Int. Cl.⁵ : **H04N 1/40**

(30) Priorité : **23.01.90 FR 9000729**

(43) Date de publication de la demande :
**28.08.91 Bulletin 91/35**

(84) Etats contractants désignés :
**AT BE CH DE DK ES FR GB GR IT LI LU NL SE**

(71) Demandeur : **SOCIETE D'APPLICATIONS
GENERALES D'ELECTRICITE ET DE
MECANIQUE SAGEM
6, Avenue d'Iéna
F-75783 Paris Cédex 16 (FR)**

(72) Inventeur : **Brot, Michel
24 rue Victor Puiseux
95100 Argenteuil (FR)**

(74) Mandataire : **Bloch, Gérard et al
2, square de l'Avenue du Bois
F-75116 Paris (FR)**

(54) Appareil optique d'analyse de documents.

(57) L'introduction du document (2) à analyser dans l'appareil déclenche l'allumage d'une source lumineuse (1) pour éclairer le document. Pour tenir compte du fait que l'intensité de la source n'atteint que progressivement sa valeur en régime permanent, l'analyse est retardée par rapport à l'allumage. La valeur du retard est commandable par un organe manuel (9) manoeuvré par l'utilisateur pour commander une valeur faible si le document est du type noir et blanc, et une valeur plus élevée s'il comprend des demi-teintes.

L'invention s'applique notamment aux dispositifs d'analyse des télécopieurs.

EP 0 443 887 A1

## APPAREIL OPTIQUE D'ANALYSE DE DOCUMENTS

La présente invention est relative à un appareil optique d'analyse de documents éclairés par une source lumineuse, dans lequel l'analyse du document est retardée par rapport à l'allumage de la source.

L'invention s'applique notamment aux télécopieurs, pour l'analyse des documents dont le contenu est à émettre à distance.

Dans de tels appareils, la source lumineuse est en général un tube fluorescent, dont l'intensité lumineuse n'atteint que progressivement sa valeur en régime permanent, après allumage.

L'allumage de la source est, en principe, déclenché par l'introduction du papier dans l'appareil, et le retard entre l'allumage du tube et l'analyse du document est donc destiné à laisser au tube le temps d'atteindre un état où il délivre une intensité lumineuse suffisante pour permettre une analyse convenable.

Ce retard est néanmoins une source de gêne pour l'utilisateur, car il est souvent de l'ordre d'une dizaine de secondes, et il est ressenti comme une attente inutile et constitue une perte de temps.

La présente invention vise à pallier, au moins en partie, cet inconvénient en réduisant la valeur moyenne de cette attente.

A cet effet, l'invention a pour objet un appareil du type défini ci-dessus, caractérisé par le fait qu'il comprend des moyens commandables pour faire varier la valeur du retard entre l'allumage de la source et l'analyse du document.

Dans l'appareil de l'invention, l'utilisateur peut choisir la valeur du retard la plus adaptée au document qu'il doit faire analyser. En particulier, la demanderesse a observé que la majorité des documents analysés est formée de documents de type noir et blanc, c'est-à-dire comprenant seulement deux teintes bien contrastées. De tels documents peuvent être analysés avec une intensité lumineuse plus faible que des documents comprenant des demi-teintes, par exemple des plages de gris. Il est donc possible à l'utilisateur de commander, pour les documents noirs et blancs, un retard de valeur plus faible que pour des documents comprenant des teintes de gris, et donc de réduire la valeur moyenne de son attente, par rapport à ce qu'elle serait avec un appareil connu, où le retard doit être réglé une fois pour toutes à une valeur systématiquement grande, pour permettre l'analyse correcte des documents à demi-teintes.

Avantageusement, ledit retard peut prendre une première valeur, pour l'analyse des documents de type noir et blanc, et une deuxième valeur supérieure à ladite première valeur, pour l'analyse des documents comprenant des demi-teintes.

Dans la forme de réalisation préférée, il est prévu un organe manuel pour commander la valeur dudit retard.

Dans ce cas, on obtient un appareil qui reste très simple tout en permettant un gain de temps relativement important.

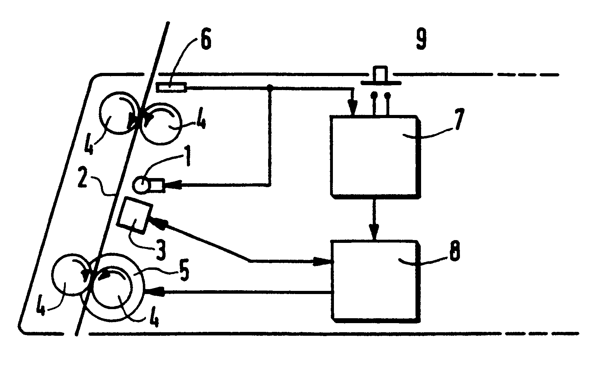

La présente invention sera mieux comprise grâce à la description suivante de la forme de réalisation préférée de l'appareil de l'invention, faite en se référant aux dessins annexés, sur lesquels l'unique figure représente un schéma par blocs du dispositif d'analyse d'un appareil conforme à l'invention.

En se référant à la figure, un dispositif d'analyse de documents, par exemple du type employé dans un télécopieur, comprend une source lumineuse, en l'occurrence un tube fluorescent 1, pour éclairer un document 2 analysé par une tête optique d'analyse 3. La tête 3 est du type connu qui analyse le document ligne de pixels par ligne de pixels. Il est donc prévu un dispositif d'entraînement, comprenant ici deux paires de rouleaux 4 entraînés par un moteur 5, pour entraîner le document 2 devant la tête 3.

La mise sous tension, ou allumage, du tube 1 est déclenchée par l'introduction du document 2 dans l'appareil, introduction détectée à l'aide d'un capteur 6, par exemple optique.

Un circuit à retard commandable 7 est disposé entre la sortie du capteur 6 et un circuit de commande 8 du moteur 5 et de la tête d'analyse 3, pour retarder l'analyse du document par rapport à l'allumage du tube 1.

La valeur du retard introduit par le circuit 7 est ici commandée par un poussoir 9 disposé sur une face de l'appareil, pour être actionné manuellement par l'utilisateur.

Tant que le poussoir 9 n'est pas actionné, le retard introduit par le circuit 7 prend une première valeur, aussi courte que possible, tout en étant compatible avec une analyse convenable d'un document noir et blanc. Par exemple, le retard est de 5 secondes. Un tel temps ne laisse pas au tube 1 le temps d'atteindre son régime permanent et son intensité lumineuse maximale, mais l'intensité atteinte est suffisante pour l'analyse d'un document noir et blanc.

Lorsque le poussoir 9 est actionné, le retard introduit par le circuit 7 passe à une valeur plus importante, par exemple 12 secondes. Après ce temps, l'intensité lumineuse du tube 1 est suffisante pour une analyse correcte des plages de gris.

Ainsi, lorsque l'utilisateur doit émettre le contenu d'un document de type noir et blanc, il n'actionne pas le poussoir 9, et utilise donc l'appareil comme un appareil connu, tout en bénéficiant d'un temps de retard, c'est-à-dire d'attente, réduit.

Si l'utilisateur doit émettre le contenu d'un document avec des nuances de gris, il actionne le poussoir 9, ce qui assure une qualité suffisante de l'analyse.

Le circuit 7 comprend par exemple un circuit monostable commandable, ou encore un circuit d'horloge et un compteur de capacité commandable dont le débordement commande le circuit 8.

Naturellement, dans le cas où il est par ailleurs prévu, sur le télécopieur, une commande d'analyse en demi-teinte, l'organe 9 peut être remplacé par un commutateur électronique commandé automatiquement lorsque l'opérateur demande une telle analyse en demi-teinte.

**Revendications**

1. Appareil optique d'analyse de documents éclairés par une source lumineuse (1), dans lequel l'analyse du document (2) est retardée par rapport à l'allumage de la source (1), caractérisé par le fait qu'il comprend des moyens commandables (7, 9) pour faire varier la valeur du retard entre l'allumage de la source (1) et l'analyse du document (2).

2. Appareil selon la revendication 1, dans lequel ledit retard peut prendre une première valeur, pour l'analyse des documents de type noir et blanc, et une deuxième valeur supérieure à ladite première valeur, pour l'analyse des documents comprenant des demi-teintes.

3. Appareil selon l'une des revendications 1 ou 2, dans lequel il est prévu un organe manuel (9) pour commander la valeur dudit retard.

4. Appareil selon l'une des revendications 1 à 3, pour émettre des télécopies.

EP 0 443 887 A1

Office européen
des brevets

**RAPPORT DE RECHERCHE EUROPEENNE**

Numero de la demande

EP    91 40 0113

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0158962 (SHARP)<br>* page 9, ligne 26 – page 10, ligne 16 *<br>* figure 6 *<br><br>--- | 1 | H04N1/40 |
| A | DE-A-3540528 (SHARP)<br>* page 13, lignes 1 – 4; revendication 3 *<br>* figure 10 *<br><br>----- | 1 | |
| | | | **DOMAINES TECHNIQUES RECHERCHES (Int. Cl.5)**<br><br>H04N |

Le présent rapport a été établi pour toutes les revendications

| Lieu de la recherche | Date d'achèvement de la recherche | Examinateur |
|---|---|---|
| LA HAYE | 24 AVRIL 1991 | ISA S. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

................................................................
& : membre de la même famille, document correspondant

EPO FORM 1503 03.82 (P0402)

5